# EUROPEAN PATENT SPECIFICATION

(11) **EP 3 869 709 B1**
(45) Date of publication and mention of the grant of the patent: **30.11.2022**
(21) Application number: 20157840.8
(22) Date of filing: 18.02.2020
(51) Int. Cl.: H04B 10/071

(54) **AN OPTICAL TIME DOMAIN REFLECTOMETRY (OTDR) SYSTEM FOR DIAGNOSING A PASSIVE OPTICAL NETWORK (PON)**
SYSTEM FÜR OPTISCHE ZEITBEREICHSREFLEKTOMETRIE (OTDR) ZUR DIAGNOSE EINES PASSIVEN OPTISCHEN NETZWERKS (PON)
SYSTÈME DE RÉFLECTOMÉTRIE DE DOMAINE TEMPOREL OPTIQUE (OTDR) POUR LE DIAGNOSTIC D'UN RÉSEAU OPTIQUE PASSIF (PON)

(43) Date of publication of application: 25.08.2021
(73) Proprietor: Nokia Solutions and Networks Oy, 02610 Espoo (FI)
(72) Inventor: Straub, Michael, 70435 Stuttgart (DE)
(74) Representative: IP HILLS NV

(56) References cited:
- EP-A1- 2 656 515
- EP-A1- 2 726 837
- EP-B1- 2 656 515
- EP-B1- 2 726 837
- US-A1- 2017 163 003
- YUKSEL K ET AL: "Centralised Optical Monitoring of Tree-structured Passive Optical Networks using a Raman-assisted OTDR", TRANSPARENT OPTICAL NETWORKS, 2007. ICTON '07. 9TH INTERNATIONAL CONFERENCE ON, IEEE, PI, 1 July 2007 (2007-07-01), pages 175-178, XP031130476, ISBN: 978-1-4244-1248-8

## Description

### Technical Field

Various example embodiments relate to diagnostic measurements for an optical distribution network (abbreviated ODN) that forms part of a Passive Optical Network (abbreviated PON) wherein endpoints named optical network units (abbreviated ONUs) are coupled to an optical line termination (abbreviated OLT) through the optical fibre links of the ODN. More particularly, various embodiments relate to diagnostic measurements using optical time domain reflectometry (abbreviated OTDR).

### Background

In a Passive Optical Network (abbreviated PON), an optical line termination (abbreviated OLT) in a central office (abbreviated CO) is coupled to multiple optical network units (abbreviated ONUs) in respective optical endpoints via an optical distribution network (ODN). The ODN typically has a tree and branch architecture and comprises optical fibres and passive splitter/combiners. A splitter/combiner splits the optical signals in the downstream direction from OLT to ONUs, and multiplexes the optical signals in the upstream direction from ONUs to OLT. In an example where a CO is connected to n optical endpoints, n being a positive integer number, the OLT at the CO is connected via an optical fibre - the so-called feeder fibre in the feeder section of the ODN - to a 1:n passive optical splitter which in turn is connected via n optical fibres - the so-called distribution fibres or drop fibres in the drop section of the ODN - to the n ONUs in the respective optical endpoints. To avoid collisions amongst the n users on the shared part of the ODN, for instance on the feeder fibre in the above example, a time domain multiplexing (abbreviated TDM) protocol is used in the downstream direction and a time domain multiple access (abbreviated TDMA) protocol is used in the upstream direction.

For monitoring or diagnostic purposes, like for example detecting and localizing physical fibre impairments or measuring signal attenuation along the physical fibre, it is known to use optical time domain reflectometry (abbreviated OTDR). OTDR equipment is connected to a fibre to transmit a signal therein, and to receive and analyse the backscattered signal in order to diagnose the fibre.

Non-patent literature document "Centralised Optical Monitoring of Tree-structured Passive Optical Networks using a Raman-assisted OTDR" by Yuksel et al. (Transparent Optical Networks, 2007. ICTON '07) discloses a Raman assisted OTDR to increase the dynamic range of the reflectometry measurement, thus enabling to detect more faults in the network, and especially fibre breaks after the splitter. Further state of the art systems for monitoring optical fibers or optical networks are described in patent literature documents EP 2726 837 A1 and US 2017/163003 A1.

### Summary

Due to the architecture of a PON with feeder section and drop section, the drop fibres behind the optical splitter are in parallel and the backscattered signals from these drop fibres are superimposed with overlap. As a consequence thereof, the drop fibres cannot be monitored and diagnosed individually through OTDR from the central office.

OTDR measurements from the user endpoint sites could be considered to monitor and diagnose the drop fibres individually. However, this requires integration of OTDR measurement equipment in the ONUs, increasing the complexity and cost of ONUs, and/or requires sharing of OTDR measurement equipment. Sharing the OTDR measurement equipment however requires access to the customer premises to enable a field technician to execute the OTDR tests one after the other. Such solution is inconvenient for the users and inacceptable for telecom operators as the effort and costs to schedule field tests involving technicians at the customer premises is too high.

An alternative solution to visualize the individual drop fibres with OTDR measurements executed at the central office relies on the introduction of passive reflexes at the endpoints of the drop fibres. Such passive reflex enhances the signal reflection at the endpoint, hence making the endpoint visible or distinguishable in the superimposed signal received by the OTDR equipment. The endpoints of the drop fibres can be detected this way, but all or most physical fibre impairments remain invisible in the superimposed backscattered signals. Further, neither the passive reflexes nor any visible impairments can be assigned to individual drop fibres as a result of which only partial information can be gathered on the ODN.

Summarizing, there is no satisfactory solution for monitoring a PON ODN through OTDR technology as existing or straightforward solutions are complex, costly, involve field tests by technicians and/or result in incomplete information on the ODN.

Amongst others, it is therefore an object of embodiments of the invention to disclose an OTDR system and method that overcomes one or several of the above-identified shortcomings. More particularly, it is an object of embodiments of the invention to enable monitoring and diagnosing a PON ODN through OTDR measurements with low complexity and cost, increased visibility on the drop section, and without requiring dispatch of technicians to customer premises.

The scope of protection sought for various embodiments of the invention is set out by the independent claims.

The embodiments and features described in this specification that do not fall within the scope of the independent claims, if any, are to be interpreted as examples useful for understanding various embodiments of the invention.

The above defined object is achieved, according to a first example aspect of the present disclosure, by an optical time domain reflectometry system, abbreviated OTDR system, as defined in claim 1, adapted for diagnosing a passive optical network PON comprising an optical line termination, abbreviated OLT, an optical distribution network, abbreviated ODN and a plurality of optical network units, abbreviated ONUs, the OTDR system comprising:
- a transmitter adapted to transmit in the downstream direction of the ODN a transmitted optical signal having a wavelength substantially corresponding to the Raman wavelength of an ONU transmitter in one ONU of the ONUs;
- a receiver adapted to receive a backscattered optical signal, resulting from reflections of the transmitted optical signal in the ODN; and
- an OTDR manager configured to:
   - control the transmitter to transmit the transmitted signal in a first silent time window wherein none of the ONUs is allowed to upstream transmit;
   - control the receiver to receive a first backscattered signal resulting from transmission in the first silent time window;
   - control the transmitter to transmit the transmitted signal in a second time window wherein the one ONU is controlled to upstream transmit and no other ONU of the ONUs is allowed to upstream transmit;
   - control the receiver to receive a second backscattered signal resulting from transmission in the second time window; and
   - subtract the first backscattered signal from the second backscattered signal to thereby obtain a reflectometry measurement for the drop section of the ODN towards the one ONU.

Thus, example embodiments of the invention rely on combining OTDR measurements from the central office with the Raman effect from an ONU laser to amplify backscattered signals on the drop fibre towards that ONU and make them visible in the superimposed backscattered signals received by the OTDR receiver. The Raman effect inside an optical fibre is well-known: a laser transmitting an optical signal with a certain wavelength automatically amplifies light with another wavelength present in the same fibre. The other wavelength is called the Raman wavelength of the laser. This Raman wavelength is obtained by reducing the frequency of the optical signal transmitted by the laser by 13,2 Terahertz. As an example, a laser transmitting an optical signal with a wavelength of 1310 nanometres (nm), has a Raman wavelength of 1390 nm and consequently automatically amplifies optical signals with a wavelength near 1390 nm present in the fibre wherein the laser is transmitting at 1310 nm. The Raman effect has found application in long haul transmission systems as high signal gains can be achieved this way by using high power lasers over long fibre distances. The effective gain of an ONU upstream laser acting as Raman pump on short fibre distances is much smaller but nevertheless can be observed and therefore can be exploited to amplify signals on a single drop line behind an optical splitter, and make these signals distinguishable from superimposed signals originating from parallel drop lines to other ONUs in the same PON. In order to achieve this, the OTDR laser at the CO side must downstream transmit optical signals at the Raman wavelength of an ONU laser during the measurement. The measurement consists of two phases. In a first phase that might be common for all ONUs, the OTDR laser transmits a signal at the Raman wavelength during a time window wherein all ONUs are silent, and the OTDR receiver measures a first backscattered signal. This first backscattered signal allows to monitor and diagnose the feeder section but does not allow to monitor and diagnose individual drop fibres. In a second phase, that is executed for one particular ONU, the OTDR laser transmits the same signal at the Raman wavelength during a time window wherein the particular ONU is controlled to upstream transmit while all other ONUs are controlled to remain silent. The OTDR receiver hence measures a second backscattered signal that corresponds to the first backscattered signal wherein the backscattering on the drop fibre towards the particular ONU is slightly amplified as a result of the active ONU transmitter acting as Raman pump for this drop link and the wavelength transmitted by the OTDR transmitter. Subtracting the first backscattered signal received by the OTDR system from the second backscattered signal received by the OTDR system results in a measurement distinguishing the drop fibre to the active ONU from all other ONUs that remained silent (or deactivated) in the second time window. The so obtained signal hence allows to monitor and diagnose a single, dedicated drop fibre to a single ONU, through OTDR measurements executed from the CO, not involving any technicians dispatched to customer premises for field tests.

In embodiments of the OTDR system according to the present system, defined by claim 2, the OTDR manager is further configured to:
- control the transmitter to transmit the transmitted signal in different second time windows wherein a respective one of the ONUs is controlled to upstream transmit and no other ONU of the ONUs but the respective one is allowed to upstream transmit;
- control the receiver to receive different second backscattered signals resulting from transmission in respectively the different second time windows; and
- subtract the first backscattered signal respectively from the different second backscattered signals to thereby obtain reflectometry measurements for the respective drop sections of the ODN towards the ONUs.

Indeed, separate measurements can be executed with the different ONUs in order to monitor and diagnose all drop links in the drop section of the PON ODN behind the PON splitter. In situations wherein all ONU lasers transmit at the same wavelength, like for instance 1310 nm in a GPON system, the first phase of the measurement is common for all ONUs and need not be repeated. The second phase of the measurement during a time window wherein only one ONU is active and all others are inactive, needs to be scheduled and executed for each ONU separately. Consequently, a different second time window has to be reserved for each individual ONU. In that second time window, the corresponding ONU shall upstream transmit in order to act as Raman pump for the backscattered signals on its drop fibre. All other ONUs are controlled to remain silent in that second time window. In a following second time window, another ONU shall upstream transmit and act as Raman pump while all other ONUs are kept silent, allowing to monitor and diagnose another drop fibre. If the PON has n ONUs, n second time windows have to be reserved in order enable monitoring and diagnosing all individual drop fibres to the n ONUs through OTDR measurements from the CO.

In embodiments of the OTDR system according to the invention, defined by claim 3, the OTDR manager is further configured to:
- control the one ONU to upstream transmit a signal containing only 1 bits in the second time window.

A signal consisting of bits that all have a bit value set to 1 (one), has the highest possible energy. Consequently, the Raman effect shall be maximized allowing to better distinguish the backscattering in the drop fibre of that ONU from backscatterings in parallel drop fibres. The OTDR measurement time shall be reduced in comparison to embodiments wherein modulated signals are transmitted by the ONU laser in the second time window, because the signal power and consequently also the Raman effect shall typically be higher when an unmodulated signal containing only 1 bits is transmitted. Such reduced OTDR measurement time has a positive effect on the overall capacity of the PON as the length in time of the second time window(s) can be shortened.

In alternative embodiments of the OTDR system according to the invention, defined by claim 4, the OTDR manager is further configured to:
- control the one ONU to upstream transmit a signal containing useful data in the second time window.

Thus, modulated signals can be transmitted by the ONU lasers acting as Raman pump in the second time window(s) in alternate embodiments. Modulated signals bring the advantage that useful data are transmitted in the second time window(s), albeit by a single ONU. Modulated signals however have as disadvantage that their average power is typically 3 dB below the maximal power that a signal can contain, and therefore also the Raman effect will be reduced. As a consequence thereof, the OTDR measurement time to monitor and diagnose a drop fibre shall increase, with negative effect on the overall capacity or performance of the PON.

In embodiments of the OTDR system according to the invention, defined by claim 5, the first silent time window and/or the second time window correspond to an existing ranging window or an existing silent window of the PON.

Indeed, during the first phase of the OTDR measurement, i.e. the so-called first time window, it must be assured that there is no upstream data signal transmission by any of the ONUs. During the second phase of the OTDR measurement, the so-called second time window(s), it must be assured that there is upstream transmission by only one ONU, whose laser acts as Raman pump. The ranging window(s) defined in the different PON standards as silent time windows wherein the ONU transmitters are deactivated to enable new ONUs to range, could be reused for the first phase and/or the second phase of the OTDR measurement. Other already standardised silent time windows could be reused as well. It is noticed that in case the OTDR measurement takes more time than foreseen in already standardized ranging/silent windows, the measurement can be split over multiple ranging/silent windows, and for example be averaged over time. The use of existing, standardized ranging windows or silent windows brings the advantage that the OTDR measurement does not affect the capacity or performance of the PON.

In embodiments of the OTDR system according to the invention, defined by claim 6, the first silent time window and/or the second time window correspond to a newly preserved silent window of the PON.

Indeed, as an alternative to using existing, standardized silent time windows like the ranging windows foreseen in the different PON standards, the definition of an extra, preserved OTDR measurement window could be considered to serve as first OTDR time window (wherein all ONUs are silent) and/or as second OTDR time window (wherein all but one ONU are kept silent). The definition of a new OTDR measurement window brings the advantage that the OTDR measurement does not interfere with other processes, like for instance the ranging of a new upcoming ONU.

In example embodiments of the OTDR system according to the invention, as defined by claim 7, the Raman wavelength of an ONU transmitter in one of the ONUs corresponds to the wavelength obtained by frequency shifting optical signals transmitted by the ONU transmitter over 13,2 Terahertz.

Indeed, as explained here above, the Raman effect is a well-known effect of the fibre wherein a laser is transmitting at a certain wavelength, the so-called excitation wavelength. The Raman effect resides in the automatic amplification of light with a specific wavelength, present in the fibre at the time of excitation. The specific wavelength is called the Raman wavelength in the present patent application and is obtained by downshifting the frequency of the excitation signal over an amount of 13,2 Terahertz, named the Raman shift. In the example of GPON for instance where ONU lasers are upstream transmitting at a wavelength of 1310 nm, the Raman wavelength becomes 1390 nm. In other flavours of PON, the Raman wavelength shall be different. It is also possible that different Raman wavelengths must be applied for different ONUs in PONs wherein the ONUs transmit in upstream direction at different wavelengths. In such embodiments of the invention, the OTDR transmitter may have a configurable wavelength. If this is not the case, the OTDR system may be equipped with a transmitter with defined wavelength, aligned to the ONU lasers to match their Raman wavelength.

The above defined object is achieved, according to a second example aspect of the present disclosure, by an optical time domain reflectometry method as defined in claim 8, abbreviated OTDR method, for diagnosing a passive optical network PON comprising an optical line termination, abbreviated OLT, an optical distribution network, abbreviated ODN and a plurality of optical network units, abbreviated ONUs, the OTDR method comprising:
- transmitting in a first silent time window wherein none of the ONUs is allowed to upstream transmit, in the downstream direction of the ODN a transmitted optical signal having a wavelength substantially corresponding to the Raman wavelength of an ONU transmitter in one ONU of the ONUs;
- receiving a first backscattered signal resulting from transmission in the first silent time window;
- transmitting the transmitted optical signal also in a second time window wherein the one ONU is controlled to upstream transmit and no other ONU of the ONUs is allowed to upstream transmit;
- receiving a second backscattered signal resulting from transmission in the second time window; and
- subtracting the first backscattered signal from the second backscattered signal to thereby obtain a reflectometry measurement for the drop section of the ODN towards the one ONU.

The above defined object is achieved, according to a third example aspect of the present disclosure, by a controller as defined in claim 9, comprising at least one processor and at least one memory including computer program code, the at least one memory and computer program code configured to, with the at least one processor, cause the controller to:
- control a transmitter of an optical time domain reflectometry system, abbreviated OTDR system, in a passive optical network PON comprising an optical line termination, abbreviated OLT, an optical distribution network, abbreviated ODN and a plurality of optical network units, abbreviated ONUs, to transmit in a first silent time window wherein none of the ONUs is allowed to upstream transmit, in the downstream direction of the ODN a transmitted optical signal having a wavelength substantially corresponding to the Raman wavelength of an ONU transmitter in one ONU of the ONUs;
- control a receiver of the OTDR system to receive a first backscattered signal resulting from transmission in the first silent time window;
- control the transmitter to also transmit the transmitted signal in a second time window wherein the one ONU is controlled to upstream transmit and no other ONU of the ONUs is allowed to upstream transmit;
- control the receiver to receive a second backscattered signal resulting from transmission in the second time window; and
- subtract the first backscattered signal from the second backscattered signal to thereby obtain a reflectometry measurement for the drop section of the ODN towards the one ONU.

The above defined object is achieved, according to a fourth example aspect of the present disclosure, by a computer program product as defined by claim 10, comprising computer-executable instructions for causing a controller to perform at least the following:
- control a transmitter of an optical time domain reflectometry system, abbreviated OTDR system, in a passive optical network PON comprising an optical line termination, abbreviated OLT, an optical distribution network, abbreviated ODN and a plurality of optical network units, abbreviated ONUs, to transmit in a first silent time window wherein none of the ONUs is allowed to upstream transmit, in the downstream direction of the ODN a transmitted optical signal having a wavelength substantially corresponding to the Raman wavelength of an ONU transmitter in one ONU of the ONUs;
- control a receiver of the OTDR system to receive a first backscattered signal resulting from transmission in the first silent time window;
- control the transmitter to also transmit the transmitted signal in a second time window wherein the one ONU is controlled to upstream transmit and no other ONU of the ONUs is allowed to upstream transmit;
- control the receiver to receive a second backscattered signal resulting from transmission in the second time window; and
- subtract the first backscattered signal from the second backscattered signal to thereby obtain a reflectometry measurement for the drop section of the ODN towards the one ONU.

The above defined object is achieved, according to a fifth example aspect of the present disclosure, by a computer readable storage medium as defined in claim 11, comprising computer-executable instructions for performing the following steps when the program is run on a computer:
- control a transmitter of an optical time domain reflectometry system, abbreviated OTDR system, in a passive optical network PON comprising an optical line termination, abbreviated OLT, an optical distribution network, abbreviated ODN and a plurality of optical network units, abbreviated ONUs, to transmit in a first silent time window wherein none of the ONUs is allowed to upstream transmit, in the downstream direction of the ODN a transmitted optical signal having a wavelength substantially corresponding to the Raman wavelength of an ONU transmitter in one ONU of the ONUs;
- control a receiver of the OTDR system to receive a first backscattered signal resulting from transmission in the first silent time window;
- control the transmitter to also transmit the transmitted signal in a second time window wherein the one ONU is controlled to upstream transmit and no other ONU of the ONUs is allowed to upstream transmit;
- control the receiver to receive a second backscattered signal resulting from transmission in the second time window; and
- subtract the first backscattered signal from the second backscattered signal to thereby obtain a reflectometry measurement for the drop section of the ODN towards the one ONU.

### Brief Description of the Drawings

Some example embodiments will now be described with reference to the accompanying drawings.
Fig. 1 is a block scheme illustrating an example implementation of a passive optical network or PON;
Fig. 2 shows the typical result of a traditional OTDR measurement in a passive optical network like the PON illustrated by Fig. 1;
Fig. 3A, Fig. 3B, Fig. 3C and Fig. 3D show the respective results of OTDR measurements in four scenario's wherein only one drop fibre is connected to the PON of Fig. 1, and all drop fibres are disconnected from the PON except drop fibre 141 in Fig. 3A, drop fibre 142 in Fig. 3B, drop fibre 143 in Fig. 3C and drop fibre 14n in Fig. 3D;
Fig. 4 is a block scheme illustrating an example implementation of a PON and an example embodiment of the OTDR system 400 according to the invention;
Fig. 5 shows the results of OTDR measurements performed by the OTDR system of Fig. 4 in a first silent time window wherein no ONU is upstream transmitting and in a second time window wherein only ONU 13n is upstream transmitting;
Fig. 6 shows the OTDR measurement for the drop fibre 14n as determined by the OTDR system 400 of Fig. 4; and
Fig. 7 shows an example embodiment of a suitable computing system 700 for performing one or several steps in embodiments of the invention.

### Detailed Description of Embodiment(s)

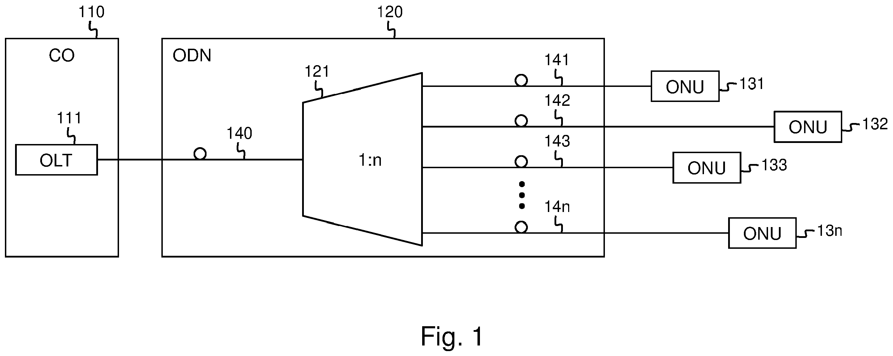

Fig. 1 illustrates the typical architecture of a Passive Optical Network or PON. An optical line termination, OLT or 111, at a central office, CO or 110, is coupled to multiple optical endpoints called optical network units or ONUs, 131, 132, 133, ... 13n, via an optical distribution network, ODN or 120. The ONUs are sometimes also called optical network terminations or ONTs. The optical distribution network 120 has a tree- and-branch architecture and comprises an optical feeder fibre 140 in the so-called feeder section, a passive 1:n splitter/multiplexer 121, and n optical distribution fibres 141, 142, 143, ..., 14n or drop fibres in the so-called drop section that connect the passive optical splitter/multiplexer 121 to respective ones of the ONUs 131 ... 13n. In example embodiments, n may for instance be 64. Typically, the central office 110 shall host multiple OLTs, similar to OLT 111. In example embodiments, 8 OLTs or 16 OLTs may for instance be integrated on a single linecard. The feeder fibre 140 is shared for downstream transmissions towards multiple ONUs and upstream transmissions from multiple ONUs. To avoid collisions between the n users sharing the PON, a time-division multiplexing or TDM protocol is used in downstream direction and a time-division multiple access or TDMA protocol is used in upstream direction. The ONUs 131 ... 13n in other words receive data in different time intervals and transmit data in different time intervals assigned to them. The upstream time intervals assigned to the ONUs may have equal or different lengths, are often called timeslots, and jointly form a timeframe of for instance 125 microseconds. As an alternative to TDM/TDMA, or in combination with TDM/TDMA, the downstream and/or upstream transmissions to/from an ONU may use wavelengths that are different from the downstream and/or upstream transmissions to/from a different ONU, if WDM or wavelength division multiplexing is applied.

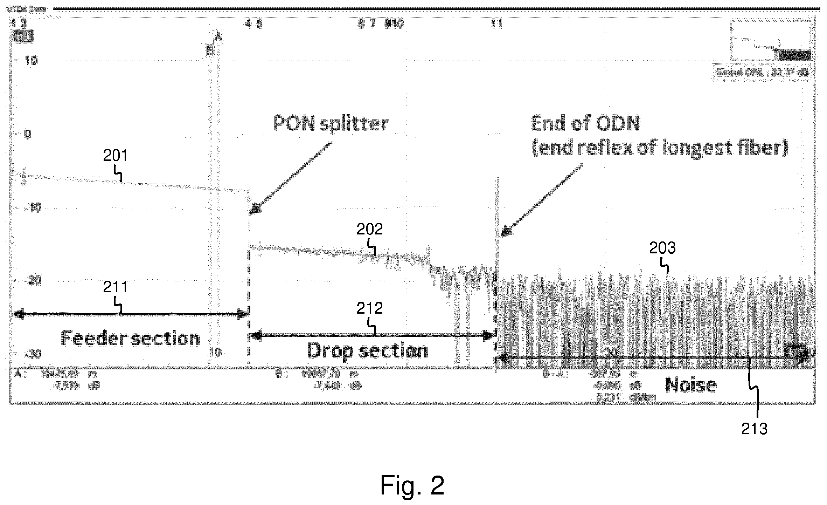

For monitoring and diagnosing the treelike ODN 120 from CO side, OTDR (Optical Time Domain Reflectometry) measurement systems are in use. Such OTDR systems transmit a signal into the ODN 120, measure the reflected signal or backscattered signals as a function of time and allow to estimate the nature and location of physical impairments in the fibres from the nature and reception time of the backscattered signals. Fig. 2 shows the typical result of such an OTDR measurement executed from the CO side in the PON illustrated by Fig. 1. A first part 201 of the backscattered signal corresponds to the feeder section 211, i.e. feeder fibre 140 in Fig. 1; a second part 202 of the backscattered signal corresponds to the drop section 212, i.e. drop fibres 141-14n in Fig. 1, and a third part 203 of the backscattered signal represents noise 213 representative for the section behind the ONUs 131-13n. At the border between the first part 201 and the second part 202, the backscattered signal shows the effect of the PON splitter, i.e. 121 in Fig. 1. At the border of the second part 202 and third part 203, the effect of the ONU that is farthest away, i.e. the ONU 132 in Fig. 1 that is connected to the longest drop fibre 142, is visible. However, due to the given structure of ODN 120, the drop fibres 141-14n behind the optical power splitter 121 are in parallel and it is not possible to distinguish the effect of the individual drop fibres 141-14n in the second part 202 of the backscattered signal. The backscattered signals of all optical fibres 141-14n behind the splitter 121 are superimposed and cannot be measured individually. Consequently, it is also impossible to detect the nature of impairments, let aside the precise location of impairments in the drop fibres 141-14n from the superimposed backscattered signals 202.

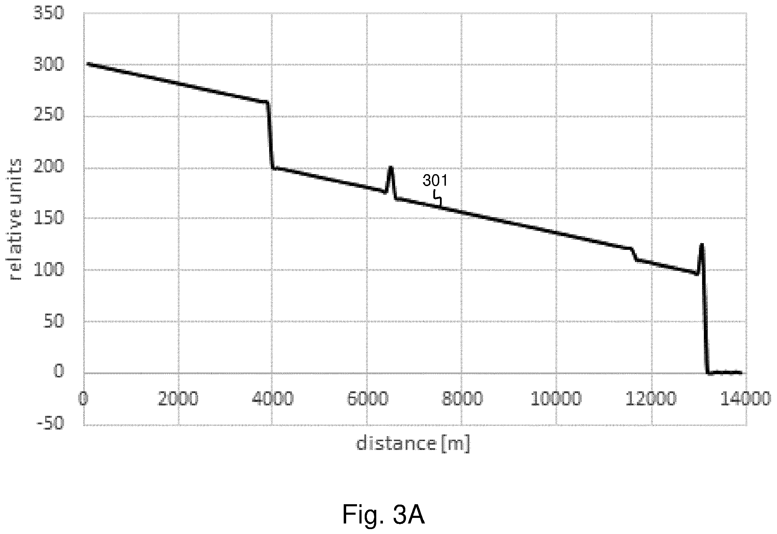

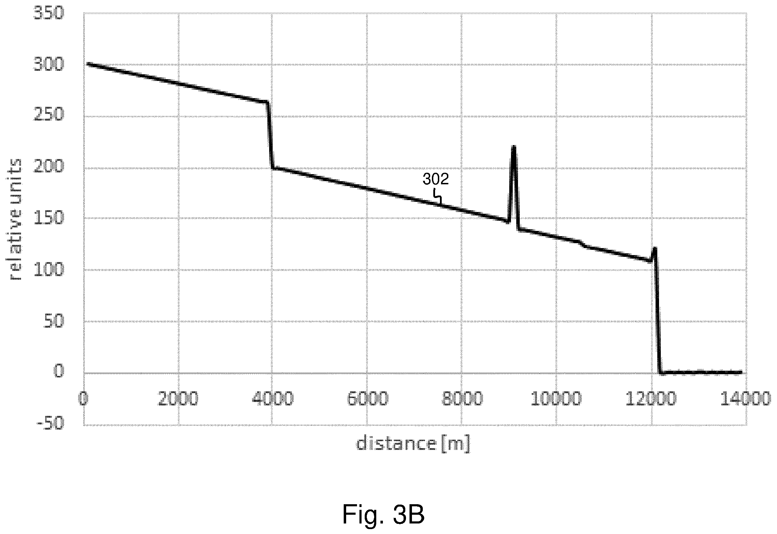

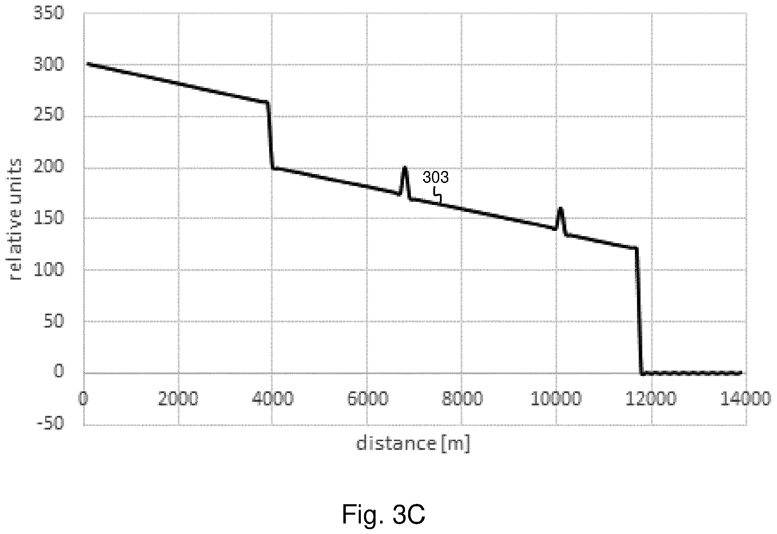

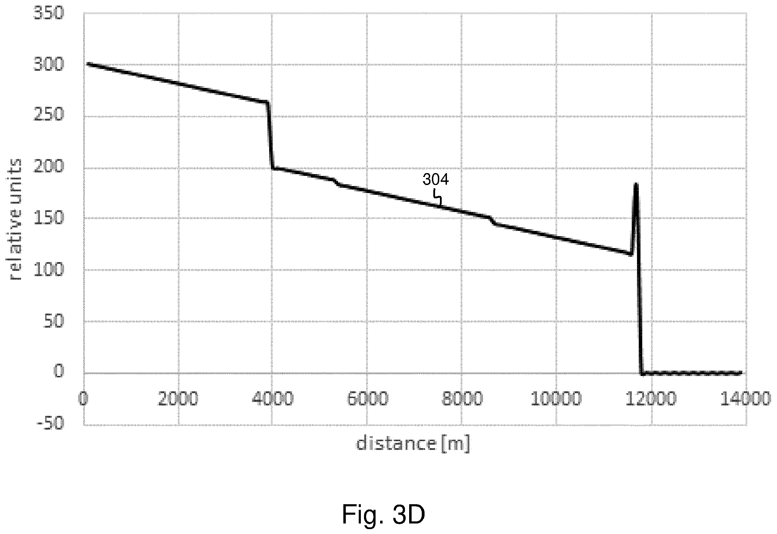

An OTDR trace or measurement that allows to detect and localize impairments in an individual drop fibre can be obtained if only that single drop fibre (and its ONU) are connected to the PON splitter 121 while all other drop fibres are disconnected from the PON splitter 121. In a real PON, such scenarios cannot be realized because they involve technical interventions and service interruptions for all other ONUs each time an ONU or its drop fibre must be measured. Fig. 3A, Fig. 3B, Fig. 3C and Fig. 3D however show the respective results of such OTDR measurements in four scenario's that were simulated. The horizontal axis of Fig. 3A - Fig. 3D represents the distance in meters measured along the fibres, starting from the CO side where the OTDR system is supposed to transmit the OTDR test signal and receive the backscattered signal. The distance in metres is determined from the receipt time of the backscattered signal. The vertical axis of Fig. 3A - Fig. 3D represents the signal strength or signal power, here expressed in relative units rather than absolute units. In the first scenario, illustrated by Fig. 3A, drop fibre 141 and ONU 131 are connected to the PON of Fig. 1, whereas all other drop fibres are disconnected from the PON. The backscattered signal 301 measured by the OTDR receiver in Fig. 3A hence allows to analyse the drop fibre 141, in addition of course to feeder fibre 140. In the second scenario, illustrated by Fig. 3B, drop fibre 142 and ONU 132 are connected to the PON of Fig. 1, whereas all other drop fibres are disconnected from the PON. The backscattered signal 302 measured by the OTDR receiver in Fig. 3B hence allows to analyse the drop fibre 142, in addition to feeder fibre 140. In the third scenario, illustrated by Fig. 3C, drop fibre 143 and ONU 133 are connected to the PON of Fig. 1, whereas all other drop fibres are disconnected from the PON. The backscattered signal 303 measured by the OTDR receiver in Fig. 3C hence allows to analyse the drop fibre 143, in addition to feeder fibre 140. In the fourth scenario, illustrated by Fig. 3D, drop fibre 14n and ONU 13n are connected to the PON of Fig. 1, whereas all other drop fibres are disconnected from the PON. The backscattered signal 304 measured by the OTDR receiver in Fig. 3D hence allows to analyse the drop fibre 14n, in addition to feeder fibre 140.

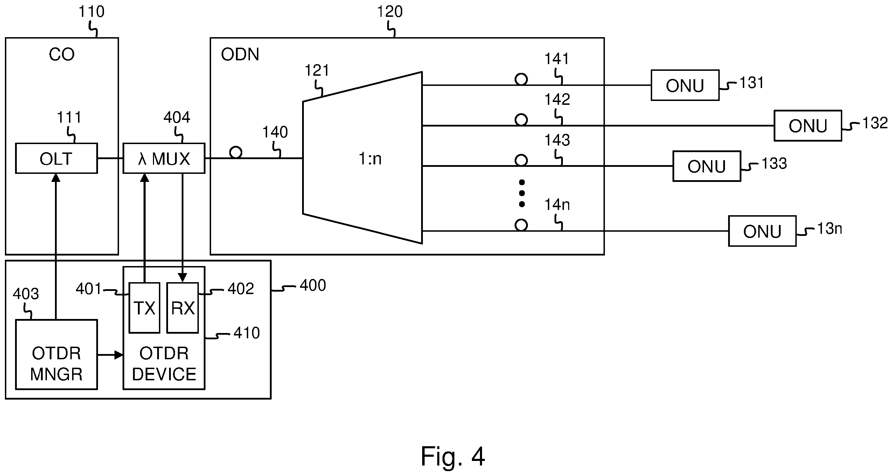

Fig. 4 shows the PON of Fig. 1 with identical references pointing to identical components of the PON. In addition, Fig. 4 shows an example embodiment of the OTDR system 400 according to the invention. The OTDR system 400 comprises a transmitter 401 and a receiver 402, integrated in OTDR device 410. The transmitter 401 and receiver 402 are coupled to a wavelength multiplexer 404 placed in the feeder fibre 140 near the CO 110. OLT 111 is also coupled to this wavelength multiplexer 404. The OTDR transmitter wavelength and the received backscattered signal wavelength are the same. The task of the wavelength multiplexer 404 is to separate the transmitted signal and received backscattered signal by use of a 3 dB coupler or circulator in front of the transmitter 401 and receiver 402. The OTDR system 400 further comprises an OTDR manager 403. The transmitter 401, receiver 402 and OTDR manager 403 jointly implement a Raman gain OTDR measurement system.

To implement such a Raman gain OTDR measurement system, the OTDR transmitter 401 is controlled to transmit with a defined wavelength, aligned to the ONU lasers. In the example of Fig. 4, it is assumed that all ONU lasers transmit upstream signals with a same wavelength. During the OTDR measurement it further has to be assured that there is no upstream data signal transmission. Silent windows or ranging windows with disabled transmitters at the ONUs are used, or alternatively, an extra OTDR measurement window could possibly be defined too to enable the Raman gain OTDR measurement.

It is noticed that the OTDR measurement system 400 could be external, as is shown in Fig. 4. Alternatively, embedded equipment within the OLT transceiver could be used. Anyhow, high performance / high dynamic range measurements are needed to distinguish the Raman amplified drop fibre from the backscattered signals from drop fibres without amplification.

The OTDR system 400 combines measurements from central office side with use of the Raman gain to amplify the drop lines behind the splitter 121 from the user side. The use of the ONU upstream lasers as Raman pumps enables cost-efficient OTDR measurements, without requiring additional components at the user side and without the need to dispatch technicians to the customer premises for field tests.

The Raman effect is well known in long haul transmission systems wherein it is used to amplify optical data streams. High signal gains can be achieved by using high power pump lasers. Even on short fibre distances however, the amplification resulting from the Raman effect can be observed. The effective gain is much lower but can be used to amplify signals on the drop lines behind a PON splitter for a certain amount if the single line is powered from the user side. This is valid for data signals, but also for OTDR signals. In order to benefit from the Raman effect, the OTDR signals have to follow the Raman gain requirements, meaning a frequency shift between the powering source and the desired signal of 13.2 THz. In a GPON system for example wherein the upstream laser acting as Raman pump has a transmit wavelength of 1310 nm, the OTDR measurement wavelength needs to be in the range of 1390 nm. The effective Raman gain is well below 1dB for typical drop links of 1 to 10 kilometres, but this is still enough to amplify a dedicated drop link and to distinguish this drop link from all the others in the superimposed backscattered signals measured by the OTDR receiver.

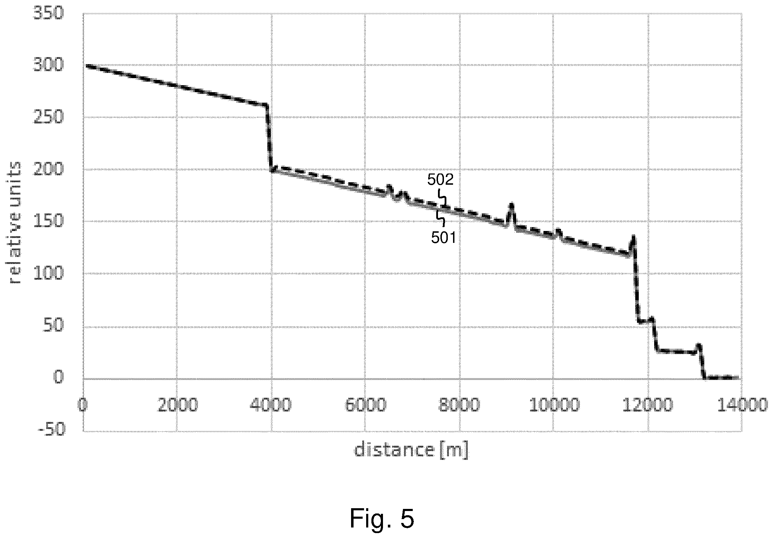

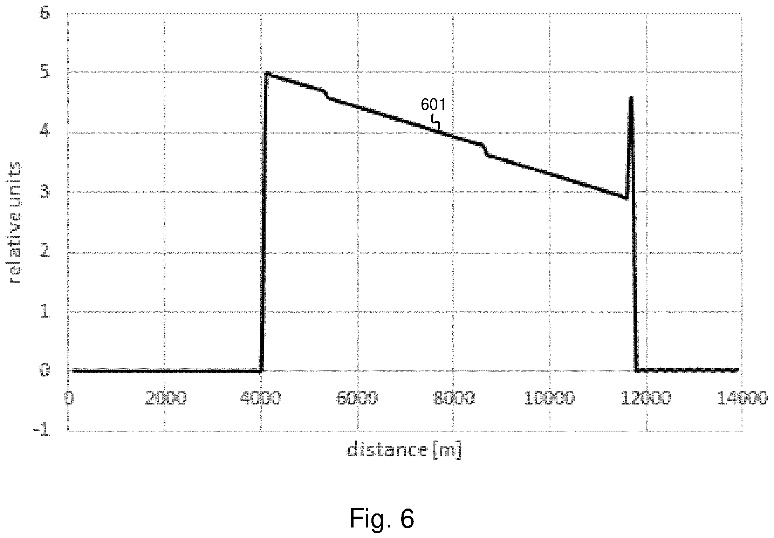

Fig. 5 and Fig. 6 show the result of the OTDR measurement for drop fibre 14n in Fig. 4. In a first time interval wherein all ONUs 131-13n are silent, i.e. not upstream transmitting, the OTDR transmitter 401 downstream transmits a test signal while the OTDR receiver 402 measures the reflections or backscattered signals. The backscattered signals measured during this first time interval are shown in Fig. 5 and represented there by 501. The measurement up to approximately 4000 m represents the feeder fibre 140, whereas the measurement from 4000 m up to approximately 13000 m represents the superimposed backscattering of the drop fibres 141-14n. In a second time interval wherein ONU 13n is upstream transmitting a signal that consist of 1-bits only whereas all other ONUs remain silent, the OTDR transmitter 401 downstream transmits the same test signal at the Raman frequency of ONU 13n while the OTDR receiver 402 measures the reflections or backscattered signals. The backscattered signals measured during this second time interval are also shown in Fig. 5 and represented by 502. The signal 502 resembles signal 501 with as sole difference that the backscattering in drop fibre 14n is amplified as a result of the Raman effect induced in this fibre by the upstream transmission of ONU 13n during the second time interval. It is noticed that Raman powering the feeder section 140 from the ONU side will not bring a significant gain for signals in the feeder fibre 140, because the pump signal is attenuated by the power splitter 121. Subtracting in the OTDR manager 403 the OTDR trace data 501 of the ODN 120 without any Raman amplification from the OTDR trace data 502 of the ODN 120 with amplification for drop link 14n by using the upstream laser of ONU 13n as a Raman pump, results in measurement 601, showing only what is different between both measurements 501 and 502 and cancelling out all common parts between measurements 501 and 502. The signal 601 shown in Fig. 6 hence is representative for the isolated backscattering in drop fibre 14n. This measurement 601 corresponds, albeit in relative units, to the theoretic measurement 304 obtained for the drop fibre 14n in Fig. 3D. Similarly, separate OTDR measurements can be executed for the other drop fibres 141, 142, 143, ... behind the PON splitter 121. Each of the ONUs 131, 132, 133, ... must be used as Raman pump in different time windows wherein all but one ONU are kept silent, and wherein the OTDR device 410 is controlled to re-execute the OTDR measurement with the same test signal at the same wavelength. This will result in individual OTDR measurements similar to 502 that, after subtraction of OTDR measurement 501, result in signals similar to 601 each indicative for a different drop fibre and allowing to monitor and analyse such drop fibre for impairments. The Raman amplified OTDR measurements this way enable to monitor and analyse the entire PON, both the feeder section and drop section, through measurements that are all executed from the CO side. There is no need for field tests executed by technicians, ONUs are not made more complex and expensive through integration of OTDR equipment, and there is no need to install additional devices like reflective elements at the ONUs to make drop fibres (partially) visible.

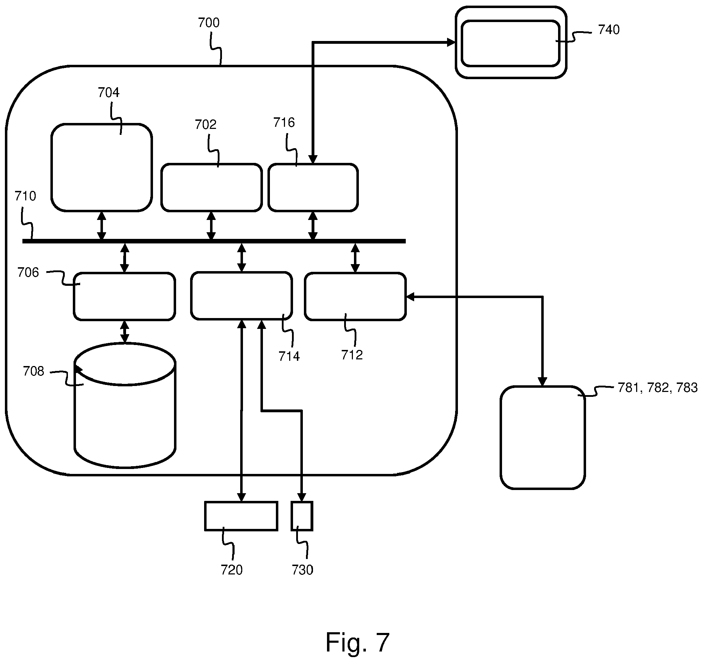

Fig. 7 shows a suitable computing system 700 enabling to implement embodiments of the method for OTDR measurement in a PON according to the invention. Computing system 700 may in general be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems, for example with other computing devices 781, 782, 783. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage element(s) 708 above is/are described as a local disk, in general any other suitable computer-readable media such as a removable magnetic disk, optical storage media such as a CD or DVD, -ROM disk, solid state drives, flash memory cards, ... could be used. Computing system 700 could thus correspond to the controller circuitry or OTDR manager 403 in the embodiment illustrated by Fig. 4.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical time domain reflectometry system (400), abbreviated OTDR system, adapted for diagnosing a passive optical network PON comprising an optical line termination (111), abbreviated OLT, an optical distribution network (120), abbreviated ODN and a plurality of optical network units (131, 132, 133, ... 13n), abbreviated ONUs, said OTDR system (400) comprising:
- a transmitter (401) adapted to transmit in the downstream direction of said ODN (120) a transmitted optical signal having a wavelength substantially corresponding to the Raman wavelength of an ONU transmitter in one ONU (13n) of said ONUs (131-13n);
- a receiver (402) adapted to receive a backscattered optical signal, resulting from reflections of said transmitted optical signal in said ODN (120); and
- an OTDR manager (403) configured to:
- control said transmitter (401) to transmit said transmitted signal in a first silent time window wherein none of said ONUs (131-13n) is allowed to upstream transmit;
- control said receiver (402) to receive a first backscattered signal (501) resulting from transmission in said first silent time window;
- control said transmitter (401) to transmit said transmitted signal in a second time window wherein said one ONU (13n) is controlled to upstream transmit and no other ONU of said ONUs (131-13n) is allowed to upstream transmit;
- control said receiver (402) to receive a second backscattered signal (502) resulting from transmission in said second time window; and
- subtract said first backscattered signal (501) from said second backscattered signal (502) to thereby obtain a reflectometry measurement (601) for the drop section (14n) of said ODN (120) towards said one ONU (13n).

2. An OTDR system (400) according to claim 1, wherein said OTDR manager (403) is further configured to:
- control said transmitter (401) to transmit said transmitted signal in different second time windows wherein a respective one of said ONUs (131-13n) is controlled to upstream transmit and no other ONU of said ONUs (131-13n) but said respective one is allowed to upstream transmit;
- control said receiver (402) to receive different second backscattered signals resulting from transmission in respectively said different second time windows; and
- subtract said first backscattered signal respectively from said different second backscattered signals to thereby obtain reflectometry measurements for the respective drop sections (141, 142, 143, ... 14n) of said ODN (120) towards said ONUs (131, 132, 133, ..., 13n).

3. An OTDR system (400) according to claim 1, wherein said OTDR manager (403) is further configured to:
- control said one ONU (13n) to upstream transmit a signal containing only 1 bits in said second time window.

4. An OTDR system (400) according to claim 1, wherein said OTDR manager (403) is further configured to:
- control said one ONU (13n) to upstream transmit a signal containing useful data in said second time window.

5. An OTDR system (400) according to claim 1, wherein said first silent time window and/or said second time window correspond to an existing ranging window or an existing silent window of said PON.

6. An OTDR system (400) according to claim 1, wherein said first silent time window and/or said second time window correspond to a newly preserved silent window.

7. An OTDR system (400) according to claim 1, wherein said Raman wavelength of an ONU transmitter in one of said ONUs (131-13n) corresponds to the wavelength obtained by frequency shifting optical signals transmitted by said ONU transmitter over 13,2 Terahertz.

8. An optical time domain reflectometry method, abbreviated OTDR method, for diagnosing a passive optical network PON comprising an optical line termination (111), abbreviated OLT, an optical distribution network (120), abbreviated ODN and a plurality of optical network units (131, 132, 133, ..., 13n), abbreviated ONUs, said OTDR method comprising:
- transmitting in a first silent time window wherein none of said ONUs (131-13n) is allowed to upstream transmit, in the downstream direction of said ODN (120) a transmitted optical signal having a wavelength substantially corresponding to the Raman wavelength of an ONU transmitter in one ONU (13n) of said ONUs (131-13n);
- receiving a first backscattered signal (501) resulting from transmission in said first silent time window;
- transmitting said transmitted optical signal also in a second time window wherein said one ONU (13n) is controlled to upstream transmit and no other ONU of said ONUs (131-13n) is allowed to upstream transmit;
- receiving a second backscattered signal (502) resulting from transmission in said second time window; and
- subtracting said first backscattered signal (501) from said second backscattered signal (502) to thereby obtain a reflectometry measurement (601) for the drop section (14n) of said ODN (120) towards said one ONU (13n).

9. A controller (403) comprising at least one processor (702) and at least one memory (704) including computer program code, the at least one memory (704) and computer program code configured to, with the at least one processor (702), cause the controller (403) to:
- control a transmitter (401) of an optical time domain reflectometry system (400), abbreviated OTDR system, in a passive optical network PON comprising an optical line termination (111), abbreviated OLT, an optical distribution network (120), abbreviated ODN and a plurality of optical network units (131, 132, 133, ... 13n), abbreviated ONUs, to transmit in a first silent time window wherein none of said ONUs (131-13n) is allowed to upstream transmit, in the downstream direction of said ODN (120) a transmitted optical signal having a wavelength substantially corresponding to the Raman wavelength of an ONU transmitter in one ONU (13n) of said ONUs (131-13n);
- control a receiver (402) of said OTDR system (400) to receive a first backscattered signal (501) resulting from transmission in said first silent time window;
- control said transmitter (401) to also transmit said transmitted signal in a second time window wherein said one ONU (13n) is controlled to upstream transmit and no other ONU of said ONUs (131-13n) is allowed to upstream transmit;
- control said receiver (402) to receive a second backscattered signal (502) resulting from transmission in said second time window; and
- subtract said first backscattered signal (501) from said second backscattered signal (502) to thereby obtain a reflectometry measurement (601) for the drop section (14n) of said ODN (120) towards said one ONU (13n).

10. A computer program product comprising computer-executable instructions for causing a controller (403) to perform at least the following:
- control a transmitter (401) of an optical time domain reflectometry system (400), abbreviated OTDR system, in a passive optical network PON comprising an optical line termination (111), abbreviated OLT, an optical distribution network (120), abbreviated ODN and a plurality of optical network units (131, 132, 133, ... 13n), abbreviated ONUs, to transmit in a first silent time window wherein none of said ONUs (131-13n) is allowed to upstream transmit, in the downstream direction of said ODN (120) a transmitted optical signal having a wavelength substantially corresponding to the Raman wavelength of an ONU transmitter in one ONU (13n) of said ONUs (131-13n);
- control a receiver (402) of said OTDR system (400) to receive a first backscattered signal (501) resulting from transmission in said first silent time window;
- control said transmitter (401) to also transmit said transmitted signal in a second time window wherein said one ONU (13n) is controlled to upstream transmit and no other ONU of said ONUs (131-13n) is allowed to upstream transmit;
- control said receiver (402) to receive a second backscattered signal (502) resulting from transmission in said second time window; and
- subtract said received first backscattered signal (501) from said received second backscattered signal (502) to thereby obtain a reflectometry measurement (601) for the drop section (14n) of said ODN (120) towards said one ONU (13n).

11. A computer readable storage medium comprising computer-executable instructions for performing the following steps when the program is run on a computer:
- control a transmitter (401) of an optical time domain reflectometry system (400), abbreviated OTDR system, in a passive optical network PON comprising an optical line termination (111), abbreviated OLT, an optical distribution network (120), abbreviated ODN and a plurality of optical network units (131, 132, 133, ... 13n), abbreviated ONUs, to transmit in a first silent time window wherein none of said ONUs (131-13n) is allowed to upstream transmit, in the downstream direction of said ODN (120) a transmitted optical signal having a wavelength substantially corresponding to the Raman wavelength of an ONU transmitter in one ONU (13n) of said ONUs (131-13n);
- control a receiver (402) of said OTDR system (400) to receive a first backscattered signal (501) resulting from transmission in said first silent time window;
- control said transmitter (401) to also transmit said transmitted signal in a second time window wherein said one ONU (13n) is controlled to upstream transmit and no other ONU of said ONUs (131-13n) is allowed to upstream transmit;
- control said receiver (402) to receive a second backscattered signal (502) resulting from transmission in said second time window; and
- subtract said received first backscattered signal (501) from said received second backscattered signal (502) to thereby obtain a reflectometry measurement (601) for the drop section (14n) of said ODN (120) towards said one ONU (13n).

## Patentansprüche

1. Optisches Zeitdomänenreflektometriesystem (400), abgekürzt OTDR-System, das zum Diagnostizieren eines passiven optischen Netzwerks PON angepasst ist, das einen optischen Leitungsabschluss (111), abgekürzt OLT, ein optisches Verteilungsnetzwerk (120), abgekürzt ODN, und eine Vielzahl von optischen Netzwerkeinheiten (131, 132, 133, ... 13n), abgekürzt ONUs, umfasst, wobei das OTDR-System (400) Folgendes umfasst:
- einen Sender (401), der angepasst ist, ein übertragenes optisches Signal mit einer Wellenlänge, die im Wesentlichen der Raman-Wellenlänge eines ONU-Senders in einer ONU (13n) der ONUs (131-13n) entspricht, in der Stromabwärtsrichtung des ODN (120) zu übertragen;
- einen Empfänger (402), der angepasst ist, ein rückgestreutes optisches Signal zu empfangen, das aus Reflexionen des übertragenen optischen Signals im ODN (120) resultiert; und
- einen OTDR-Verwalter (403), der zu Folgendem ausgelegt ist:
- Steuern des Senders (401), um das übertragene Signal in einem ersten stillen Zeitfenster zu übertragen, in dem keines der ONUs (131-13n) stromaufwärts übertragen darf;
- Steuern des Empfängers (402), um ein erstes rückgestreutes Signal (501) zu empfangen, das aus einer Übertragung im ersten stillen Zeitfenster resultiert;
- Steuern des Senders (401), um das übertragene Signal in einem zweiten Zeitfenster zu übertragen, in dem die eine ONU (13n) zum stromaufwärtigen Übertragen gesteuert wird und keine andere ONU der ONUs (131-13n) stromaufwärts übertragen darf;
- Steuern des Empfängers (402), um ein zweites rückgestreutes Signal (502) zu empfangen, das aus einer Übertragung im zweiten Zeitfenster resultiert; und
- Subtrahieren des ersten rückgestreuten Signals (501) vom zweiten rückgestreuten Signal (502), um dadurch eine Reflektometriemessung (601) für den Anschlussbereich (14n) des ODN (120) zu der einen ONU (13n) zu erhalten.

2. OTDR-System (400) nach Anspruch 1, wobei der OTDR-Verwalter (403) ferner zu Folgendem ausgelegt ist:
- Steuern des Senders (401), um das übertragene Signal in anderen zweiten Zeitfenstern zu übertragen, in dem eine jeweilige der ONUs (131-13n) zum stromaufwärtigen Übertragen gesteuert wird und keine andere ONU der ONUs (131-13n) stromaufwärts übertragen darf, die jeweilige eine aber stromaufwärts übertragen darf;
- Steuern des Empfängers (402), um andere zweite rückgestreute Signale zu empfangen, die jeweils aus einer Übertragung in den anderen zweiten Zeitfenstern resultieren; und
- Subtrahieren des ersten rückgestreuten Signals jeweils von den anderen zweiten rückgestreuten Signalen, um dadurch Reflektometriemessungen für die jeweiligen Anschlussbereiche (141, 142, 143, ... 14n) des ODN (120) zu den ONUs (131, 132, 133, ..., 13n) zu erhalten.

3. OTDR-System (400) nach Anspruch 1, wobei der OTDR-Verwalter (403) ferner zu Folgendem ausgelegt ist:
- Steuern der einen ONU (13n) zum stromaufwärtigen Übertragen eines Signals, das nur 1 Bit enthält, im zweiten Zeitfenster.

4. OTDR-System (400) nach Anspruch 1, wobei der OTDR-Verwalter (403) ferner zu Folgendem ausgelegt ist:
- Steuern der einen ONU (13n) zum stromaufwärtigen Übertragen eines Signals, das nützliche Daten enthält, im zweiten Zeitfenster.

5. OTDR-System (400) nach Anspruch 1, wobei das erste stille Zeitfenster und/oder das zweite Zeitfenster einem bestehenden Entfernungsmessfenster oder einem bestehenden stillen Fenster des PON entsprechen.

6. OTDR-System (400) nach Anspruch 1, wobei das erste stille Zeitfenster und/oder das zweite Zeitfenster einem neu bewahrten stillen Fenster entsprechen.

7. OTDR-System (400) nach Anspruch 1, wobei die Raman-Wellenlänge eines ONU-Senders in einer der ONUs (131-13n) der Wellenlänge entspricht, die durch eine Frequenzverschiebung von optischen Signalen erhalten wird, die vom ONU-Sender über 13,2 Terahertz übertragen werden.

8. Optisches Zeitdomänenreflektometrieverfahren, abgekürzt OTDR-Verfahren zum Diagnostizieren eines passiven optischen Netzwerks PON, das einen optischen Leitungsabschluss (111), abgekürzt OLT, ein optisches Verteilungsnetzwerk (120), abgekürzt ODN, und eine Vielzahl von optischen Netzwerkeinheiten (131, 132, 133, ... 13n), abgekürzt ONUs, umfasst, wobei das OTDR-Verfahren Folgendes umfasst:
- Übertragen in einem ersten stillen Zeitfenster, in dem keines der ONUs (131-13n) ein übertragenes optisches Signal mit einer Wellenlänge, die im Wesentlichen der Raman-Wellenlänge eines ONU-Senders in einer ONU (13n) der ONUs (131-13n) entspricht, in der Stromabwärtsrichtung des ODN (120) stromaufwärts übertragen darf;
- Empfangen eines ersten rückgestreuten Signals (501), das aus einer Übertragung im ersten stillen Zeitfenster resultiert;
- Übertragen des übertragenen optischen Signals auch in einem zweiten Zeitfenster, in dem die eine ONU (13n) zum stromaufwärtigen Übertragen gesteuert wird und keine andere ONU der ONUs (131-13n) stromaufwärts übertragen darf;
- Empfangen eines zweiten rückgestreuten Signals (502), das aus einer Übertragung im zweiten Zeitfenster resultiert; und
- Subtrahieren des ersten rückgestreuten Signals (501) vom zweiten rückgestreuten Signal (502), um dadurch eine Reflektometriemessung (601) für den Anschlussbereich (14n) des ODN (120) zu der einen ONU (13n) zu erhalten.

9. Steuerung (403), die mindestens einen Prozessor (702) und mindestens einen Speicher (704), der einen Computerprogrammcode beinhaltet, umfasst, wobei der mindestens eine Speicher (704) und der Computerprogrammcode dazu ausgelegt sind, die Steuerung (403) mit dem mindestens einen Prozessor (702) zu Folgendem zu veranlassen:
- Steuern eines Senders (401) eines optischen Zeitdomänenreflektometriesystems (400), abgekürzt OTDR-System, in einem passiven optischen Netzwerk PON, das einen optischen Leitungsabschluss (111), abgekürzt OLT, ein optisches Verteilungsnetzwerk (120), abgekürzt ODN, und eine Vielzahl von optischen Netzwerkeinheiten (131, 132, 133, ... 13n), abgekürzt ONUs, umfasst, um in einem ersten stillen Zeitfenster zu übertragen, in dem keines der ONUs (131-13n) ein übertragenes optisches Signal mit einer Wellenlänge, die im Wesentlichen der Raman-Wellenlänge eines ONU-Senders in einer ONU (13n) der ONUs (131-13n) entspricht, in der Stromabwärtsrichtung des ODN (120) stromaufwärts übertragen darf;
- Steuern eines Empfängers (402) des OTDR-Systems (400), um ein erstes rückgestreutes Signal (501) zu empfangen, das aus einer Übertragung im ersten stillen Zeitfenster resultiert;
- Steuern des Senders (401), um das übertragene Signal auch in einem zweiten Zeitfenster zu übertragen, in dem die eine ONU (13n) zum stromaufwärtigen Übertragen gesteuert wird und keine andere ONU der ONUs (131-13n) stromaufwärts übertragen darf;
- Steuern des Empfängers (402), um ein zweites rückgestreutes Signal (502) zu empfangen, das aus einer Übertragung im zweiten Zeitfenster resultiert; und
- Subtrahieren des ersten rückgestreuten Signals (501) vom zweiten rückgestreuten Signal (502), um dadurch eine Reflektometriemessung (601) für den Anschlussbereich (14n) des ODN (120) zu der einen ONU (13n) zu erhalten.

10. Computerprogrammprodukt, das computerausführbare Anweisungen zum Bewirken, dass eine Steuerung (403) mindestens Folgendes durchführt, umfasst:
- Steuern eines Senders (401) eines optischen Zeitdomänenreflektometriesystems (400), abgekürzt OTDR-System, in einem passiven optischen Netzwerk PON, das einen optischen Leitungsabschluss (111), abgekürzt OLT, ein optisches Verteilungsnetzwerk (120), abgekürzt ODN, und eine Vielzahl von optischen Netzwerkeinheiten (131, 132, 133, ... 13n), abgekürzt ONUs, umfasst, um in einem ersten stillen Zeitfenster zu übertragen, in dem keines der ONUs (131-13n) ein übertragenes optisches Signal mit einer Wellenlänge, die im Wesentlichen der Raman-Wellenlänge eines ONU-Senders in einer ONU (13n) der ONUs (131-13n) entspricht, in der Stromabwärtsrichtung des ODN (120) stromaufwärts übertragen darf;
- Steuern eines Empfängers (402) des OTDR-Systems (400), um ein erstes rückgestreutes Signal (501) zu empfangen, das aus einer Übertragung im ersten stillen Zeitfenster resultiert;
- Steuern des Senders (401), um das übertragene Signal auch in einem zweiten Zeitfenster zu übertragen, in dem die eine ONU (13n) zum stromaufwärtigen Übertragen gesteuert wird und keine andere ONU der ONUs (131-13n) stromaufwärts übertragen darf;
- Steuern des Empfängers (402), um ein zweites rückgestreutes Signal (502) zu empfangen, das aus einer Übertragung im zweiten Zeitfenster resultiert; und
- Subtrahieren des empfangenen ersten rückgestreuten Signals (501) vom empfangenen zweiten rückgestreuten Signal (502), um dadurch eine Reflektometriemessung (601) für den Anschlussbereich (14n) des ODN (120) zu der einen ONU (13n) zu erhalten.

11. Computerlesbares Speichermedium, das computerausführbare Anweisungen zum Durchführen der folgenden Schritte umfasst, wenn das Programm auf einem Computer ausgeführt wird:
- Steuern eines Senders (401) eines optischen Zeitdomänenreflektometriesystems (400), abgekürzt OTDR-System, in einem passiven optischen Netzwerk PON, das einen optischen Leitungsabschluss (111), abgekürzt OLT, ein optisches Verteilungsnetzwerk (120), abgekürzt ODN, und eine Vielzahl von optischen Netzwerkeinheiten (131, 132, 133, ... 13n), abgekürzt ONUs, umfasst, um in einem ersten stillen Zeitfenster zu übertragen, in dem keines der ONUs (131-13n) ein übertragenes optisches Signal mit einer Wellenlänge, die im Wesentlichen der Raman-Wellenlänge eines ONU-Senders in einer ONU (13n) der ONUs (131-13n) entspricht, in der Stromabwärtsrichtung des ODN (120) stromaufwärts übertragen darf;
- Steuern eines Empfängers (402) des OTDR-Systems (400), um ein erstes rückgestreutes Signal (501) zu empfangen, das aus einer Übertragung im ersten stillen Zeitfenster resultiert;
- Steuern des Senders (401), um das übertragene Signal auch in einem zweiten Zeitfenster zu übertragen, in dem die eine ONU (13n) zum stromaufwärtigen Übertragen gesteuert wird und keine andere ONU der ONUs (131-13n) stromaufwärts übertragen darf;
- Steuern des Empfängers (402), um ein zweites rückgestreutes Signal (502) zu empfangen, das aus einer Übertragung im zweiten Zeitfenster resultiert; und
- Subtrahieren des empfangenen ersten rückgestreuten Signals (501) vom empfangenen zweiten rückgestreuten Signal (502), um dadurch eine Reflektometriemessung (601) für den Anschlussbereich (14n) des ODN (120) zu der einen ONU (13n) zu erhalten.

## Revendications

1. Système de réflectométrie optique dans le domaine temporel (400), en abrégé système OTDR, adapté pour diagnostiquer un réseau optique passif PON comprenant une terminaison de ligne optique (111), en abrégé OLT, un réseau de distribution optique (120), en abrégé ODN et une pluralité d'unités de réseau optique (131, 132, 133, ..., 13n), en abrégé ONU, ledit système OTDR (400) comprenant :
- un émetteur (401) adapté pour transmettre dans la direction aval dudit ODN (120) un signal optique transmis ayant une longueur d'onde correspondant sensiblement à la longueur d'onde Raman d'un émetteur ONU dans une ONU (13n) desdites ONU (131-13n) ;
- un récepteur (402) adapté pour recevoir un signal optique rétrodiffusé résultant de réflexions dudit signal optique transmis dans ledit ODN (120) ; et
- un gestionnaire OTDR (403) configuré pour :
- commander ledit émetteur (401) pour transmettre ledit signal transmis dans une première fenêtre de temps de silence où aucune desdites ONU (131-13n) n'est autorisée à transmettre en amont ;
- commander ledit récepteur (402) pour recevoir un premier signal rétrodiffusé (501) résultant d'une transmission dans ladite première fenêtre de temps de silence ;
- commander ledit émetteur (401) pour transmettre ledit signal transmis dans une deuxième fenêtre de temps où ladite une ONU (13n) est commandée pour transmettre en amont et aucune autre ONU desdites ONU (131-13n) n'est autorisée à transmettre en amont ;
- commander ledit récepteur (402) pour recevoir un deuxième signal rétrodiffusé (502) résultant d'une transmission dans ladite deuxième fenêtre de temps ; et
- soustraire ledit premier signal rétrodiffusé (501) dudit deuxième signal rétrodiffusé (502) pour obtenir ainsi une mesure de réflectométrie (601) pour la section de chute (14n) dudit ODN (120) vers ladite une ONU (13n).

2. Système OTDR (400) selon la revendication 1, dans lequel ledit gestionnaire OTDR (403) est en outre configuré pour :
- commander ledit émetteur (401) pour transmettre ledit signal transmis dans des deuxièmes fenêtres de temps différentes où une ONU respective desdites ONU (131-13n) est commandée pour transmettre en amont et aucune autre ONU desdites ONU (131-13n), sauf ladite ONU respective, n'est autorisée à transmettre en amont ;
- commander ledit récepteur (402) pour recevoir des deuxièmes signaux rétrodiffusés différents résultant d'une transmission dans lesdites deuxièmes fenêtres de temps différentes, respectivement ; et
- soustraire ledit premier signal rétrodiffusé desdits deuxièmes signaux rétrodiffusés différents, respectivement, pour obtenir ainsi des mesures de réflectométrie pour les sections de chute (141, 142, 143, ..., 14n) respectives dudit ODN (120) vers lesdites ONU (131, 132, 133, ..., 13n).

3. Système OTDR (400) selon la revendication 1, dans lequel ledit gestionnaire OTDR (403) est en outre configuré pour :
- commander ladite une ONU (13n) pour transmettre en amont un signal contenant seulement 1 bit dans ladite deuxième fenêtre de temps.

4. Système OTDR (400) selon la revendication 1, dans lequel ledit gestionnaire OTDR (403) est en outre configuré pour :
- commander ladite une ONU (13n) pour transmettre en amont un signal contenant des données utiles dans ladite deuxième fenêtre de temps.

5. Système OTDR (400) selon la revendication 1, dans lequel ladite première fenêtre de temps de silence et/ou ladite deuxième fenêtre de temps correspond à une fenêtre de portée existante ou à une fenêtre de silence existante dudit PON.

6. Système OTDR (400) selon la revendication 1, dans lequel ladite première fenêtre de temps de silence et/ou ladite deuxième fenêtre de temps correspond à une fenêtre de silence nouvellement préservée.

7. Système OTDR (400) selon la revendication 1, dans lequel ladite longueur d'onde Raman d'un émetteur ONU dans une desdites ONU (131-13n) correspond à la longueur d'onde obtenue par décalage de fréquence des signaux optiques transmis par ledit émetteur ONU sur 13,2 Térahertz.

8. Procédé de réflectométrie optique dans le domaine temporel, en abrégé procédé OTDR, pour diagnostiquer un réseau optique passif PON comprenant une terminaison de ligne optique (111), en abrégé OLT, un réseau de distribution optique (120), en abrégé ODN et une pluralité d'unités de réseau optique (131, 132, 133, ..., 13n), en abrégé ONU, ledit procédé OTDR comprenant les étapes consistant à :
- transmettre dans une première fenêtre de temps de silence où aucune desdites ONU (131-13n) n'est autorisée à transmettre en amont, dans la direction aval dudit ODN (120), un signal optique transmis ayant une longueur d'onde correspondant sensiblement à la longueur d'onde Raman d'un émetteur ONU dans une ONU (13n) desdites ONU (131 -13n) ;
- recevoir un premier signal rétrodiffusé (501) résultant d'une transmission dans ladite première fenêtre de temps de silence ;
- transmettre ledit signal optique transmis également dans une deuxième fenêtre de temps où ladite une ONU (13n) est commandée pour transmettre en amont et aucune autre ONU desdites ONU (131-13n) n'est autorisée à transmettre en amont ;
- recevoir un deuxième signal rétrodiffusé (502) résultant d'une transmission dans ladite deuxième fenêtre de temps ; et
- soustraire ledit premier signal rétrodiffusé (501) dudit deuxième signal rétrodiffusé (502) pour obtenir ainsi une mesure de réflectométrie (601) pour la section de chute (14n) dudit ODN (120) vers ladite une ONU (13n).

9. Dispositif de commande (403) comprenant au moins un processeur (702) et au moins une mémoire (704) comportant un code de programme informatique, l'au moins une mémoire (704) et le code de programme informatique étant configurés pour, avec l'au moins un processeur (702), amener le dispositif de commande (403) à :
- commander un émetteur (401) d'un système de réflectométrie optique dans le domaine temporel (400), en abrégé système OTDR, dans un réseau optique passif PON comprenant une terminaison de ligne optique (111), en abrégé OLT, un réseau de distribution optique (120), en abrégé ODN et une pluralité d'unités de réseau optique (131, 132, 133, ..., 13n), en abrégé ONU, pour transmettre dans une première fenêtre de temps de silence où aucune desdites ONU (131-13n) n'est autorisée à transmettre en amont, dans la direction aval dudit ODN (120), un signal optique transmis ayant une longueur d'onde correspondant sensiblement à la longueur d'onde Raman d'un émetteur ONU dans une ONU (13n) desdites ONU (131-13n) ;
- commander un récepteur (402) dudit système OTDR (400) pour recevoir un premier signal rétrodiffusé (501) résultant d'une transmission dans ladite première fenêtre de temps de silence ;
- commander ledit émetteur (401) pour transmettre également ledit signal transmis dans une deuxième fenêtre de temps où ladite une ONU (13n) est commandée pour transmettre en amont et aucune autre ONU desdites ONU (131-13n) n'est autorisée à transmettre en amont ;
- commander ledit récepteur (402) pour recevoir un deuxième signal rétrodiffusé (502) résultant d'une transmission dans ladite deuxième fenêtre de temps ; et
- soustraire ledit premier signal rétrodiffusé (501) dudit deuxième signal rétrodiffusé (502) pour obtenir ainsi une mesure de réflectométrie (601) pour la section de chute (14n) dudit ODN (120) vers ladite une ONU (13n).

10. Produit de programme informatique comprenant des instructions exécutables par ordinateur pour amener un dispositif de commande (403) à réaliser au moins ce qui suit :
- commander un émetteur (401) d'un système de réflectométrie optique dans le domaine temporel (400), en abrégé système OTDR, dans un réseau optique passif PON comprenant une terminaison de ligne optique (111), en abrégé OLT, un réseau de distribution optique (120), en abrégé ODN et une pluralité d'unités de réseau optique (131, 132, 133, ..., 13n), en abrégé ONU, pour transmettre dans une première fenêtre de temps de silence où aucune desdites ONU (131-13n) n'est autorisée à transmettre en amont, dans la direction aval dudit ODN (120), un signal optique transmis ayant une longueur d'onde correspondant sensiblement à la longueur d'onde Raman d'un émetteur ONU dans une ONU (13n) desdites ONU (131-13n) ;
- commander un récepteur (402) dudit système OTDR (400) pour recevoir un premier signal rétrodiffusé (501) résultant d'une transmission dans ladite première fenêtre de temps de silence ;
- commander ledit émetteur (401) pour transmettre également ledit signal transmis dans une deuxième fenêtre de temps où ladite une ONU (13n) est commandée pour transmettre en amont et aucune autre ONU desdites ONU (131-13n) n'est autorisée à transmettre en amont ;
- commander ledit récepteur (402) pour recevoir un deuxième signal rétrodiffusé (502) résultant d'une transmission dans ladite deuxième fenêtre de temps ; et
- soustraire ledit premier signal rétrodiffusé (501) reçu dudit deuxième signal rétrodiffusé (502) reçu pour obtenir ainsi une mesure de réflectométrie (601) pour la section de chute (14n) dudit ODN (120) vers ladite une ONU (13n).

11. Support de stockage lisible par ordinateur comprenant des instructions exécutables par ordinateur pour réaliser les étapes suivantes lorsque le programme est exécuté sur un ordinateur :
- commander un émetteur (401) d'un système de réflectométrie optique dans le domaine temporel (400), en abrégé système OTDR, dans un réseau optique passif PON comprenant une terminaison de ligne optique (111), en abrégé OLT, un réseau de distribution optique (120), en abrégé ODN et une pluralité d'unités de réseau optique (131, 132, 133, ..., 13n), en abrégé ONU, pour transmettre dans une première fenêtre de temps de silence où aucune desdites ONU (131-13n) n'est autorisée à transmettre en amont, dans la direction aval dudit ODN (120), un signal optique transmis ayant une longueur d'onde correspondant sensiblement à la longueur d'onde Raman d'un émetteur ONU dans une ONU (13n) desdites ONU (131-13n) ;
- commander un récepteur (402) dudit système OTDR (400) pour recevoir un premier signal rétrodiffusé (501) résultant d'une transmission dans ladite première fenêtre de temps de silence ;
- commander ledit émetteur (401) pour transmettre également ledit signal transmis dans une deuxième fenêtre de temps où ladite une ONU (13n) est commandée pour transmettre en amont et aucune autre ONU desdites ONU (131 -13n) n'est autorisée à transmettre en amont ;
- commander ledit récepteur (402) pour recevoir un deuxième signal rétrodiffusé (502) résultant d'une transmission dans ladite deuxième fenêtre de temps ; et
- soustraire ledit premier signal rétrodiffusé (501) reçu dudit deuxième signal rétrodiffusé (502) reçu pour obtenir ainsi une mesure de réflectométrie (601) pour la section de chute (14n) dudit ODN (120) vers ladite une ONU (13n).
